# EUROPEAN PATENT APPLICATION

(11) **EP 1 796 364 A2**
(43) Date of publication of application: **13.06.2007**
(21) Application number: 06100995.7
(22) Date of filing: 27.01.2006
(51) Int. Cl.: H04N 1/00

(54) **Forming an image using data input from an image acquisition device**

(30) Priority: 12.12.2005 KR 2005121895
(71) Applicant: Samsung Electronics Co., Ltd., Suwon-si 442-742 Gyeonggi-Do (KR)
(72) Inventor: PARK, Bong-wook, Gyeonggi-do (KR)
(74) Representative: Walaski, Jan Filip

(57) **Abstract**

Provided are a method and apparatus for forming an image by receiving image data directly from an image acquisition device such as a digital camera using a USB interface or the like. The method includes receiving image data of a first image of a plurality of images to be printed from the image acquisition device; printing the first image; and while the first image is being printed, receiving image data of a second image of the plurality of images from the image acquisition device. When printing a plurality of images by receiving image data corresponding to the plurality of the images directly from the image acquisition device, the image forming apparatus receives image data corresponding to one image to be printed. After receiving the image data, the image forming apparatus immediately requests the image acquisition device to send image data of the next image to be printed and receives the image data. Therefore, the waiting time for receiving the image data is reduced, so that the time required for printing the plurality of images can be reduced.

## Description

The present invention relates to a method and apparatus for forming an image by receiving image data directly from an image acquisition device such as a digital camera. More particularly, the present invention relates to a method and apparatus for forming a plurality of images by receiving image data corresponding to the plurality of images from an image acquisition device.

Generally, an image forming apparatus converts a document created with an application program or an image taken with a device such as a digital camera into coded data and forms a visible image on a printing medium using the coded data.

With the widespread use of digital cameras providing simple image taking functions and easily-editable digital image data and the development of printing devices, various image forming apparatuses are being commercialized such that images taken with digital cameras can be printed at home with high quality. In a typical method of printing image data created by a digital camera, the image data are stored in a personal computer (PC) after being transferred from the digital camera, and the PC converts the image data into a printable data format. Then, the printable data is transmitted to an image forming apparatus connected to the PC and printed.

However, many users want to print image data taken with digital cameras in a simple way without using a PC. To satisfy this demand, photo printers have been introduced. The photo printer can be directly connected to a digital camera through a wired connection such as a universal serial bus (USB) or a wireless network connection such as BlueTooth to receive image data from the digital camera and print the image data. Therefore, a desired image can be taken and printed almost anytime and everywhere by using a portable photo printer and an image acquisition device such as a digital camera. Further, with the increasing use of portable terminals with camera modules such as cellular phones, image forming apparatuses that can be directly connected to portable terminals are being commercialized for printing image data created by the portable terminals.

In a method of printing an image using the photo printer, when a user selects an image to be printed from a digital camera, the photo printer receives data corresponding to the image from the digital camera. Then, the photo printer converts the received data into a printable data format and prints the image using the converted data. If the user selects two or more images from the digital camera in order to print them, the photo printer repeats the operations of receiving, converting, and printing for the respective images.

PictBridge is a standard protocol for printing an image by directly connecting a digital camera with an image forming apparatus. A conventional method of printing a plurality of images selected from a digital camera using an image forming apparatus will now be more specifically described, using PictBridge as an example.

When the digital camera and the image forming apparatus are connected to each other, an initialization procedure is performed to determine whether the two devices support PictBridge and obtain product information and functions of the digital camera for connection between the two devices. After the initialization procedure is completed, a user selects a plurality of images to be printed from among the images stored in the digital camera and printing options using a user interface of the digital camera. The digital camera sends a print command signal to the image forming apparatus according to a user input. The print command signal includes the number of images to be printed, the number of copies of each image, a file name of image data to be printed, and the printing options.

After receiving the print command signal, the image forming apparatus requests the digital camera to send file information such as a file size of first image data corresponding to a first image to be printed from among the plurality of images and receives the file information from the digital camera, and then, requests the digital camera to send the first image data. In response to the request, the digital camera sends the first image data to the image forming apparatus, and the image forming apparatus stores the first image data in a storage unit. Then, the image forming apparatus converts the first image data into printable data format and prints the first image using the converted image data. With regard to current state information, when the image forming apparatus prints an image, the image forming apparatus informs the digital camera that an image is being printed, and when the first image is completely printed, the image forming apparatus informs the digital camera that the first image was completely printed.

After the first image of the plurality of images is printed in this way, the image forming apparatus sequentially requests the digital camera to send file information and image data of a second image of the plurality of images to be printed and sequentially receives the file information and the image data of the second image from the digital camera. Next, the image forming apparatus converts the second image data into printable data format and prints the second image using the converted image data. These operations are repeated for the remaining images to be printed, so that all the images can be printed.

As mentioned above, in the conventional method of printing a plurality of images received from the image acquisition device such as the digital camera, transmission and reception of the next image data occurs after the current image is completely printed. Thus, the printing time for printing all of the images is long.

Exemplary embodiments of the present invention provide a method and apparatus for forming an image, which reduces the printing time when printing a plurality of images by receiving image data corresponding to the plurality of images directly from an image acquisition device such as a digital camera.

According to an aspect of the present invention, there is provided a method of forming an image using data input from an image acquisition device. The method includes receiving image data of a first image of a plurality of images to be printed from the image acquisition device;, printing the received first image;, and while the first image is being printed, receiving image data of a second image of the plurality of images from the image acquisition device.

The receiving of the second image data step preferably includes sending a signal requesting the image acquisition device to send the second image data, and receiving the second image data from the image acquisition device.

The method may further include receiving information about each of the plurality of images from the image acquisition device.

The receiving of the second image data step preferably includes comparing a size of the second image data with a data capacity that is currently available in a storage unit. If the current data capacity of the storage unit is larger than the size of the second image data, a signal requesting the image acquisition device to send the second image data is sent, and the second image data is received from the image acquisition device and the second image data is stored in the storage unit.

The method may further include informing a user that the current data capacity of the storage unit is not sufficient if a data capacity that is currently available in a storage unit is smaller than a size of the second image data.

The method may further include sending a receiving-end signal to the image acquisition device after the first image data is completely received, the receiving-end signal containing information indicating that the first image data were completely received.

The method may further include sending an entire-receiving-end signal to the image acquisition device after all image data of the plurality of images were completely received, the entire-receiving-end signal containing information indicating that all the image data of the plurality of images were completely received.

The receiving-end information and the entire-receiving-end information may be displayed on a display unit.

According to another aspect of the present invention, an apparatus for forming an image using data input from an image acquisition device is provided. The apparatus includes an interface unit for receiving image data of a first image of a plurality of images to be printed from the image acquisition device and, while the first image is being printed after the first image data was completely received, receiving image data of a second image of the plurality of images from the image acquisition device. A storage unit stores the received image data, and a printing unit performs printing using the image data stored in the storage unit.

The interface unit may send a signal requesting the image acquisition device to send the second image data while the first image is being printed after the first image data was completely received and receive information about each of the plurality of images from the image acquisition device.

The interface unit may send a signal requesting the image acquisition device to send the second image data if a data capacity that is currently available in the storage unit is larger than a size of the second image data.

The apparatus may further include a display unit for displaying information indicating that a current data capacity of the storage unit is not sufficient when the current data capacity of the storage unit is smaller than a size of the second image data.

The interface unit may send a receiving-end signal to the image acquisition device when the first image data is completely received, the receiving-end signal containing information indicating that the first image data were completely received.

The interface unit may send an entire-receiving-end signal to the image acquisition device when all image data of the plurality of images were completely received, the entire-receiving-end signal containing information indicating that all the image data of the plurality of images were completely received.

According to another aspect of the present invention, there is provided a computer-readable recording medium having a computer-readable program for executing the above-described method.

The above and other features and advantages of the present invention will become more apparent by describing in detail exemplary embodiments thereof with reference to the attached drawings in which:
Figure 1 is a block diagram of an image forming apparatus that prints an image using data input from an image acquisition device according to an embodiment of the present invention; and
Figure 2 is a flowchart of an image forming method for printing images using data input from an image acquisition device according to an embodiment of the present invention.

Throughout the drawings, like reference numbers will be understood to refer to like elements, features and structures.

Exemplary embodiments of the present invention will now be described more fully with reference to the accompanying drawings.

Exemplary embodiments of the present invention will be described herein with reference to a digital camera. However, the present invention relates to an apparatus and method of printing an image using image data input from all kinds of image acquisition devices capable of producing image data such as digital cameras, cellular phones, scanners, personal digital assistants (PDAs), or any other suitable image acquiring device.

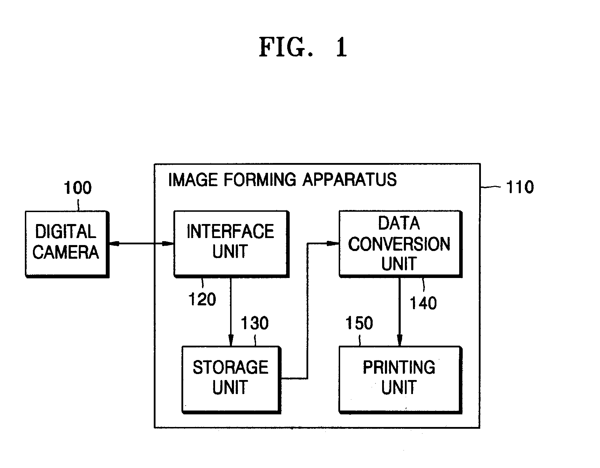

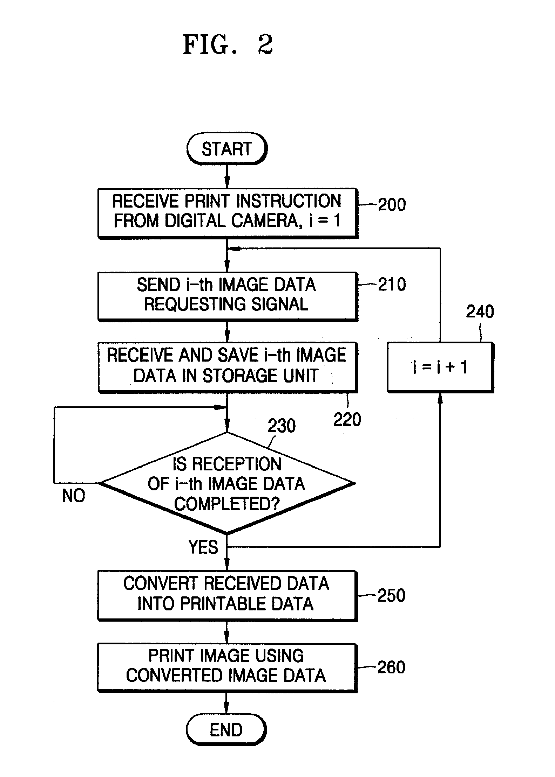

Figure 1 is a block diagram illustrating the structure of an image forming apparatus 110 that prints an image using data input from a digital camera 100, according to an exemplary embodiment of the present invention. Referring to Figure 1, the image forming apparatus 110 includes an interface unit 120, a storage unit 130, a data conversion unit 140, and a printing unit 150. An operation of the image forming apparatus 110 shown in Figure 1 will now be described in association with Figure 2, which shows a flowchart of an image forming method according to an exemplary embodiment of the present invention.

When a user selects images and requests printing of the selected images using a key input unit (not shown) of the digital camera 100, the digital camera 100 sends a print instruction to the image forming apparatus 110 according to a preset protocol, and the interface unit 120 of the image forming apparatus 110 receives the print instruction from the digital camera 100 (operation 200). The print instruction may include information such as the number of images to be printed, the number of copies of each image to be printed, a file name of image data to be printed, and printing options.

For sending and receiving signals or image data between the digital camera 100 and the interface unit 120 of the image forming apparatus 110, a universal serial bus (USB), a detachable memory card storing image data, a near infrared data communication method, or any other suitable wired or wireless data communication method may be used.

Any suitable protocol or standard can be used as appropriate for the particular communication type. For example, PictBridge, a standard developed by the Camera & Imaging Products Association (CIPA) of Japan, may be used in the case of using USB, and a standard developed by the Infrared Data Association (IrDA) may be used in the case of using a near infrared communication method. Further, a digital printer order format (DPOF) standard may be used in the case of using the detachable memory card, and BlueTooth using basic printing profile (BPP) technology may be used for sending and receiving data as other wireless data communication method.

After receiving the print instruction, the interface unit 120 generates a signal and sends the signal to the digital camera 100 to request the digital camera 100 to send first image data corresponding to a first image of the plurality of images selected by the user (operation 210). The digital camera 100 sends the first image data to the image forming apparatus 110 in response to the image data request signal, and the interface unit 120 receives the first image data and stores the first image data in the storage unit 130 (operation 220).

Before operation 220, the interface unit 120 may send information regarding the current state (such as, which page of the total pages is being currently printed) of the image forming apparatus 110 to the digital camera 100. Further, information regarding the current state of the image forming apparatus 110 may be provided to the user through a display unit (not shown) such as a liquid crystal display (LCD) of the image forming apparatus 110.

Before requesting the first image data from the digital camera 100, the interface unit 120 may ask the digital camera 100 for file information such as the size of the first image data and receive the file information from the digital camera 100. In this case, the interface unit 120 compares the received file information regarding the image data size with the available storage capacity of the storage unit 130. If the available storage capacity of the storage unit 130 is larger than the size of the image data to be received, the interface unit 120 sends a signal requesting the image data to digital camera 100. That is, the receiving of the image data starts after a required storage space is prepared in the storage unit 130.

If the available storage capacity of the storage unit 130 is smaller than the size of the image data to be received, a corresponding message may be displayed on the display unit (not shown) of the image forming apparatus 110 to inform the user that the available storage capacity of the storage unit 130 is insufficient for storing the image data. In this case, the user can stop printing of the next image data before the next image data is completely received, delete unnecessary files from the storage unit 130, and request the image data to be received and printed after there is enough storage space in the storage unit 130.

If the first image data is completely stored in the storage unit 130 (operation 230), the data conversion unit 140 converts the received first image data into printing data that can be printed using the printing unit 150 (operation 250), and the printing unit 150 prints the first image using the converted data (operation 260).

While the first image data is being converted and printed in operations 250 and 260, the interface unit 120 sends a signal to the digital camera 100 to request the digital camera 100 to send second image data corresponding to a second image of the plurality of images in parallel with operations 250 and 260 for the first image data (operations 240 and 250). As described above, the size of the image data to be received is compared with the available storage capacity of the storage unit 130, and if the available storage capacity of the storage unit 130 is smaller than the size of the image data to be received, sending the second image data request signal may be delayed until sufficient storage space exists in the storage unit 130.

Each time the respective image data are completely received, the interface unit 120 may generate a receiving-end signal and send the receiving-end signal to the digital camera 100. The receiving-end signal contains information indicating that image data corresponding to one of the plurality of images the user requested are completely received by the image forming apparatus 110. Further, the information regarding the completion of the receiving of the image data may be provided to the user through the display unit (not shown) of the image forming apparatus 110.

The digital camera 100 sends the second image data to the image forming apparatus 110 in response to the image data request signal, and the interface unit 120 receives the second image data and stores the second image data in the storage unit 130 (operation 220).

After the second image data is completely received, the data conversion and printing operations 250 and 260 are performed with regard to the second image data, and simultaneously, the request operation 210 and the receiving operation 220 are performed with regard to the second image data.

The operations 210 through 260 are repeated until the plurality of images selected by the user is completely printed. When all image data corresponding to the plurality of images selected by the user are received by the image forming apparatus 110, the interface unit 120 generates an entire-receiving-end signal and sends the entire-receiving-end signal to the digital camera 100. The entire-receiving-end signal contains information indicating that all image data are completely received.

When the digital camera 100 receives the entire-receiving-end signal, the digital camera 100 may inform the user that all image data to be printed were transmitted to the image forming apparatus 110 by using a display unit (not shown) included in the digital camera 100. Further, this information may be provided to the user through the display unit (not shown) of the image forming apparatus 110. Based on this information, the user can disconnect the digital camera 100 from the image forming apparatus 110 even before all the images are completely printed.

Another exemplary embodiment of the invention can be embodied as computer-readable codes on a computer-readable recording medium. The computer-readable recording medium is any data storage device that can store data which can be thereafter read by a computer system. Examples of the computer-readable recording medium include read-only memory (ROM), random-access memory (RAM), CD-ROMs, magnetic tapes, floppy disks, optical data storage devices, and carrier waves (such as data transmission through the Internet). The computer-readable recording medium can also be distributed over network-coupled computer systems so that the computer-readable code is stored and executed in a distributed fashion. Also, functional programs, codes, and code segments for accomplishing the present invention can be easily construed by programmers skilled in the art to which the present invention pertains.

As described above, according to exemplary embodiments of the present invention, when printing a plurality of images by directly receiving image data corresponding to the plurality of the images from an image acquisition device such as a digital camera, the image forming apparatus receives image data corresponding to one image to be printed. After receiving the image data, the image forming apparatus immediately requests the image acquisition device to send image data of the next image to be printed and receives the image data. Therefore, the waiting time for receiving the image data is reduced, so that the time required for printing the plurality of images can be reduced. Further, when all image data of the images to be printed are completely received, the image forming apparatus sends an entire-receiving-end signal to the image acquisition device to inform a user that all the image data were completely received, so that the user can disconnect the image acquisition device from the image forming apparatus before the images are completely printed.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A method of forming an image using data input from an image acquisition device, the method comprising:
receiving image data of a first image of a plurality of images to be printed from the image acquisition device;
printing the first image; and
while the first image is being printed, receiving image data of a second image of the plurality of images from the image acquisition device.

2. The method of claim 1, wherein the receiving of the second image data step comprises:
sending a signal requesting the image acquisition device to send the second image data ; and
receiving the second image data from the image acquisition device.

3. The method of claim 1, further comprising receiving information about each of the plurality of images from the image acquisition device.

4. The method of claim 3, wherein the receiving of the second image data step comprises:
comparing a size of the second image data with a data capacity that is currently available in a storage unit;
sending a signal requesting the image acquisition device to send the second image data if the current data capacity of the storage unit is larger than the size of the second image data; and
receiving the second image data from the image acquisition device and storing the second image data in the storage unit.

5. The method of claim 3, further comprising, informing a user that the current data capacity of the storage unit is not sufficient if the data capacity that is currently available in the storage unit is smaller than a size of the second image data.

6. The method of claim 1, further comprising:
when the first image data is completely received, sending a receiving-end signal to the image acquisition device, the receiving-end signal containing information indicating that the first image data were completely received.

7. The method of claim 1, further comprising:
when all image data of the plurality of images are completely received, sending an entire-receiving-end signal to the image acquisition device, the entire-receiving-end signal containing information indicating that all the image data of the plurality of images were completely received.

8. The method of claim 3, wherein the information is displayed using a display unit.

9. The method of claim 6, wherein the information is displayed using a display unit.

10. The method of claim 7, wherein the information is displayed using a display unit.

11. An apparatus for forming an image using data input from an image acquisition device, the apparatus comprising:
an interface unit for receiving image data of a first image of a plurality of images to be printed from the image acquisition device, and while the first image is being printed after the first image data was completely received, receiving image data of a second image of the plurality of images from the image acquisition device;
a storage unit for storing the received image data; and
a printing unit for performing printing using the image data stored in the storage unit.

12. The apparatus of claim 11, wherein the interface unit sends a signal requesting the image acquisition device to send the second image data while the first image is being printed after the first image data was completely received.

13. The apparatus of claim 11, wherein the interface unit receives information about each of the plurality of images from the image acquisition device.

14. The apparatus of claim 13, wherein the interface unit sends a signal requesting the image acquisition device to send the second image data if a data capacity that is currently available in the storage unit is larger than a size of the second image data.

15. The apparatus of claim 13, further comprising a display unit for displaying information indicating that the current data capacity of the storage unit is not sufficient when the current data capacity of the storage unit is smaller than a size of the second image data.

16. The apparatus of claim 11, wherein the interface unit sends a receiving-end signal to the image acquisition device when the first image data is completely received, the receiving-end signal containing information indicating that the first image data were completely received.

17. The apparatus of claim 11, wherein the interface unit sends an entire-receiving-end signal to the image acquisition device when all image data of the plurality of images are completely received, the entire-receiving-end signal containing information indicating that all the image data of the plurality of images were completely received.

18. The apparatus of claim 16, further comprising a display unit for displaying the information.

19. The apparatus of claim 17, further comprising a display unit displaying the information.

20. A computer-readable recording medium having a computer-readable program for executing the method of claim 1.
